# EUROPÄISCHE PATENTSCHRIFT

(11) **EP 3 072 778 B1**
(45) Veröffentlichungstag und Bekanntmachung des Hinweises auf die Patenterteilung: **28.06.2017**
(21) Anmeldenummer: 15000901.7
(22) Anmeldetag: 27.03.2015
(51) Int. Cl.: B62D 1/00, B62D 5/04

(54) **LENKRADBETÄTIGUNGSVORRICHTUNG**
STEERING WHEEL ACTUATION DEVICE
DISPOSITIF D'ACTIONNEMENT DE VOLANT

(43) Veröffentlichungstag der Anmeldung: 28.09.2016
(73) Patentinhaber: Ingenieurbüro Kurt Stähle, 75242 Neuhausen-Steinegg (DE)
(72) Erfinder: Stähle, Kurt, D-75242 Neuhausen-Steinegg (DE)
(74) Vertreter: Wacker, Jost Oliver

(56) Entgegenhaltungen:
- WO-A1-2011/007114
- US-A1- 2014 214 275

## Beschreibung

Die Erfindung betrifft eine Lenkradbetätigungsvorrichtung für die nachrüstbare Anbringung am serienmäßigen Lenkrad eines Kfz, wie insbesondere eines Pkw oder Lkw, nach dem Oberbegriff des Anspruchs 1. Dabei dient die Lenkradbetätigungsvorrichtung insbesondere zur motorischen Beaufschlagung des Lenkrades mit einem Drehmoment, um an diesem ohne manuelle Kraftbeaufschlagung eine Lenkbewegung ausführen zu können. Hierdurch ist eine wenigstens zeitweise motorische Betätigung des Lenkrades möglich, wie beispielsweise im Zuge einer Fernsteuerung, einer autarken Steuerung oder während eines Testbetriebs. Die Lenkradbetätigungsvorrichtung weist hierzu einen gegenüber einer Drehbewegung am Fahrzeug abstützbaren und mit einer elektrischen Spannung beaufschlagbaren Stator und einen entlang des Stators in Abhängigkeit von der an diesem anliegenden elektrischen Spannung verdrehbaren Rotor auf. An diesem Rotor sind wiederum Festlegemittel vorgesehen, die zur drehfesten Verbindung mit dem Lenkrad dienen.

Aus WO 2011/007114 A1 ist ein Lenkroboter bekannt, der zur Betätigung eines Kfz-Lenkrades einen zu diesem konzentrisch angeordneten Lenkmotor mit kreisförmigem Stator und Rotor verwendet. Der Stator und der Rotor werden dabei an einer Vorderseite des Lenkrades angebracht, wobei der Stator zusätzlich gegenüber dem Kfz fixiert wird. Am Motor ist ferner ein Zusatzlenkrad aufgesetzt, mittels dem das Lenkrad unter Zwischenlage des Lenkmotors auch manuell betätigt werden kann.

Der bekannte Lenkroboter ermöglicht durch seine Bauweise, dass auch nach dessen Einbau eine Person hinter dem Lenkrad Platz finden kann, um dieses bei blockiertem Motor auch manuell betätigt zu können. Zudem kann ein Airbag des Lenkrades durch die von Stator, Rotor und Zusatzlenkrad begrenzten Zwischenräume hindurch geöffnet werden.

Nachteilig an dem bekannten Lenkroboter ist jedoch, dass dieser vom Lenkrad weg einen relativ großen zusätzlichen Bauraum benötigt. Hierdurch wird einerseits die Sitzfreiheit der hier Platz nehmenden Person vermindert. Andererseits kann hierdurch auch die Funktionsweise des Airbags erheblich beeinträchtigt werden. Ferner führt die spezielle Konstruktionsweise des Motors zu relativ hohen Herstellungskosten des Lenkroboters insgesamt.

Die Aufgabe der Erfindung ist es, bei einer gattungsgemäßen Lenkradbetätigungsvorrichtung die genannten Nachteile zu vermeiden und eine einfache Befestigung an einem Lenkrad bei geringem benötigtem Bauraum zu ermöglichen.

Diese Aufgabe wird durch eine Lenkradbetätigungsvorrichtung mit den Merkmalen des Anspruchs 1 gelöst. Dabei ist der Stator U-förmig ausgebildet und erstreckt sich über einen Bogenabschnitt, so dass er auch im betriebsbereiten Zustand mit angebrachtem Rotor einen dauerhaft geöffneten Abschnitt aufweist. Hierdurch kann der Stator ohne weitere Maßnahmen über den geöffneten Abschnitt um eine Lenksäule des betreffenden Lenkrades herum angeordnet werden, um an der Rückseite des Lenkrades drehfest am übrigen Fahrzeug abgestützt zu werden. Durch diese rückseitige Anordnung des Stators gegenüber dem Lenkrad ist ein großer Teil der Lenkradbetätigungsvorrichtung außerhalb des Raumes zwischen Lenkrad und Fahrersitz positioniert. Dadurch steht dieser Zwischenraum einer hinter dem Lenkrad Platz nehmenden Person im Wesentlichen vollständig zur Verfügung. Auf diese Weise ist die Lenkradbetätigungsvorrichtung auch in allen Anwendungsfällen verwendbar, in denen eine Person am Lenkrad sitzt, ohne dass diese Person durch die Lenkradbetätigungsvorrichtung hinsichtlich Platz oder Bewegungsfreiheit eingeschränkt wird. Zudem kann bei einer derartigen Lenkradbetätigungsvorrichtung auch ein im Lenkrad aufgenommener Airbag ohne Einschränkung betrieben werden.

In einer besonders vorteilhaften Ausführungsform ist der U-förmige Stator einteilig ausgebildet, so dass er kostengünstig und stabil hergestellt werden kann.

Dabei ist es günstig, wenn sich der Bogenabschnitt, über den sich der Stator erstreckt, um eine offene Mitte herum über einen Winkelbereich zwischen 180° und 350°, vorzugsweise zwischen 240° und 300° erstreckt. Auf diese Weise kann ein für die Betätigung des Lenkrades benötigtes Drehmoment trotz der offenen Bauweise des Stators problemlos durch den mit dem Rotor zusammenwirkenden Stator generiert werden.

Vorteilhafterweise ist der Rotor ringförmig ausgebildet und weist dabei einen Deckungsabschnitt und einen relativ zu diesem verlagerbaren Öffnungsabschnitt auf, der zum Öffnen des Rotors dient. Dabei kann der Bogenabschnitt des Stators durch den Deckungsabschnitt des Rotors im Wesentlichen vollständig, das heißt wenigstens zu 90%, abgedeckt werden. Durch diese wenigstens nahezu vollständig herstellbare Abdeckung des Stators durch den Öffnungsabschnitt kann bei entsprechender Positionierung des Deckungsabschnittes sichergestellt werden, dass zwischen dem Stator und dem Öffnungsabschnitt keine größeren magnetischen Anziehungskräfte wirken, so dass der Öffnungsabschnitt problemlos und ohne größeren Kraftaufwand von einer geschlossenen Stellung in eine geöffnete Stellung verbracht werden kann.

Zudem ist es günstig, wenn der Öffnungsabschnitt gegenüber dem Deckungsabschnitt verschwenkbar gehalten ist. Auf diese Weise kann der Rotor in komfortabler Weise in die geöffnete Stellung verbracht werden, um ihn zusammen mit dem Stator um die Lenksäule herum anordnen zu können. Hierzu wird der Öffnungsabschnitt des Rotors am geöffneten Abschnitt des Stators angeordnet und über diese die Lenksäule in der offenen Mitte des Stators angeordnet. Anschließend kann der Rotor dann in die geschlossene Stellung verschwenkt werden, um ihn am Stator zu sichern und mit dem Lenkrad zu verbinden.

Vorteilhafterweise sind dabei zwischen dem Öffnungsabschnitt und dem Deckungsabschnitt lösbare Verriegelungsmittel vorgesehen, um den Rotor sicher in der geschlossenen Stellung fixieren zu können.

Ferner ist es günstig, wenn die Festlegemittel wenigstens ein Verbindungselement aufweisen, mittels dem ein Lenkradgegenlager unter Zwischenlage des Lenkrades am Rotor festgelegt werden kann. Durch die Anbringung eines solchen Lenkradgegenlagers kann dabei eine besonders stabile drehfeste Verbindung zwischen dem Rotor und dem Lenkrad hergestellt werden.

In einer vorteilhaften Ausführungsform ist das Lenkradgegenlager dabei ringförmig ausgebildet, so dass das Lenkrad auch bei angebrachter Lenkradbetätigungsvorrichtung in komfortabler Weise ergriffen und manuell betätigt werden kann. Hierdurch ist es beispielsweise möglich, dass die am Lenkrad Platz nehmende Person das Lenkrad jederzeit auch manuell betätigen kann.

Ferner ist es in jedem Fall günstig, wenn das Lenkradgegenlager einen Anlegebereich aufweist, der sich von einer lenkradseitigen Stirnseite zu einer lenkradabgewandten Stirnseite des Lenkradgegenlagers hin konisch verjüngt. Auf diese Weise kann bei der Fixierung des Lenkradgegenlagers am Rotor unter Zwischenlage des Lenkrades erreicht werden, dass sich die Lenkradbetätigungsvorrichtung beim Anziehen der Verbindungselemente selbsttätig gegenüber dem Lenkrad zentriert. Auf diese Weise kann wiederum eine präzise und störungsfreie Steuerung des Lenkrades im Betrieb der Lenkradbetätigungsvorrichtung gewährleistet werden.

In einer weiteren vorteilhaften Ausführungsform ist das Lenkradgegenlager dabei einteilig ausgebildet, wodurch eine ausreichende Stabilität und störungsfreie manuelle Betätigung der Lenkradbetätigungsvorrichtung ermöglicht wird.

Dabei sind vorteilhafterweise wenigstens drei in axialer Richtung vom Rotor abstehende Verbindungselemente vorgesehen, von denen eines am Öffnungsabschnitt gehalten ist. Auf diese Weise sind auch die Verbindungselemente zusammen mit dem Öffnungsabschnitt zueinander zwischen einer geschlossenen Stellung und einer geöffneten Stellung verschwenkbar. Dabei können die Verbindungselemente in der Öffnungsstellung leichter am Lenkrad positioniert werden, wie insbesondere an einer radialen Außenseite desselben.

In den Figuren ist eine beispielhafte Ausführungsform der Erfindung dargestellt. Es zeigen:
- Figur 1: eine perspektivische Explosionsdarstellung einer erfindungsgemäßen Lenkradbetätigungsvorrichtung und
- Figur 2: eine perspektivische Ansicht der Lenkradbetätigungsvorrichtung nach Fig. 1 in einer betriebsbereiten Stellung.

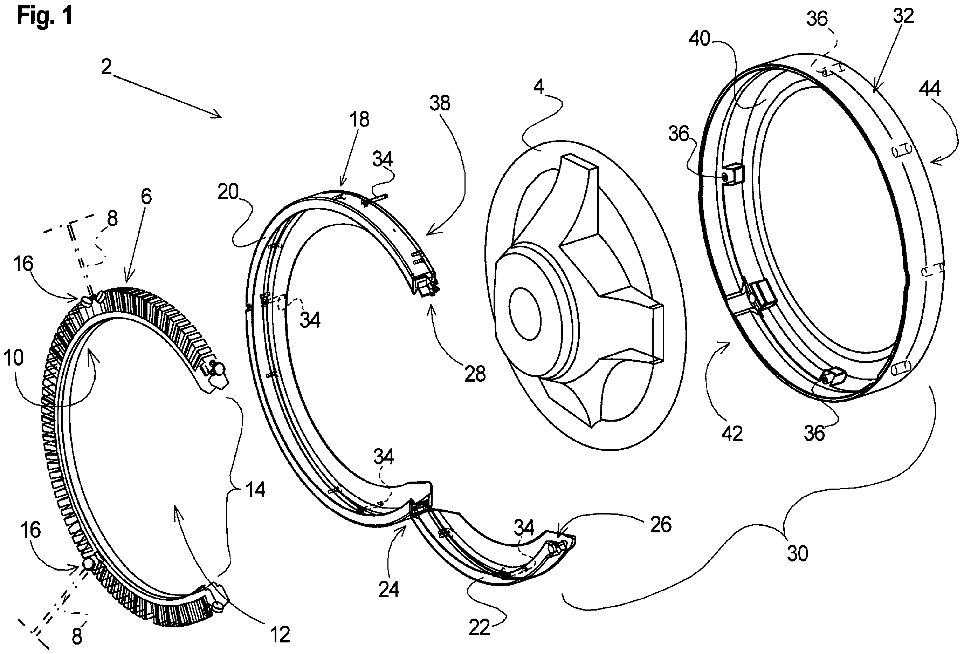

Fig. 1 zeigt eine Lenkradbetätigungsvorrichtung 2 für die nachträgliche Anbringung an einem Kfz-Lenkrad 4. Diese weist einen Stator 6 auf, der über lediglich schematisch dargestellte Abstützmittel 8 gegenüber einer Dreh- oder sonstigen Bewegung abgestützt werden kann. Die Abstützmittel 8 können hierzu in nicht näher dargestellter Weise an fest stehenden Teilen eines Kfz befestigt werden, wie beispielsweise an einem Armaturenbrett oder einer Windschutzscheibe.

Der Stator 6 ist dabei einteilig U-förmig ausgebildet und erstreckt sich entlang eines Bogenabschnittes 10, der sich über einen Winkelbereich zwischen 240° und 300° erstreckt. Auf diese Weise bildet der Stator 6 eine offene Mitte 12 und einen geöffneten Abschnitt 14 aus.

Ferner ist an dem Stator 6 eine Anordnung von Rollen 16 vorgesehen, die zur verdrehbaren Lagerung eines Rotors 18 dienen, der auf den Stator 6 aufgesetzt werden kann. Hierbei weist der Rotor 18 einen Deckungsabschnitt 20 und einen Öffnungsabschnitt 22 auf, der gegenüber dem Deckungsabschnitt 20 zwischen einer dargestellten geöffneten Stellung und einer geschlossenen Stellung verlagerbar ist. Hierzu ist der Öffnungsabschnitt 22 beispielhaft über ein Gelenk 24 verschwenkbar am Deckungsabschnitt 20 gehalten.

Darüber hinaus sind an einem vom Gelenk 24 abgewandten Ende des Öffnungsabschnittes 22 Verriegelungsmittel 26 vorgesehen, mittels denen der Öffnungsabschnitt 22 in der geschlossenen Stellung mit Verriegelungsgegenmitteln 28 des Öffnungsabschnittes 20 verriegelt werden kann, so dass der Rotor 18 stabil in einer Ringform gehalten ist.

Ferner weist die Lenkradbetätigungsvorrichtung 2 insgesamt mit 30 bezeichnete Festlegemittel auf, mittels denen der Rotor 18 drehfest mit dem Lenkrad 4 verbunden werden kann. Diese weisen ein ringförmiges Lenkradgegenlager 32 auf, das unter Zwischenlage des Lenkrades 4 am Rotor 18 befestigt werden kann. Hierzu sind am Rotor 18 mehrere Verbindungsmittel 34 vorgesehen, die mit entsprechenden Verbindungsgegenmitteln 36 des Lenkradgegenlagers 32 zusammen wirken. Die Verbindungsmittel 34 können dabei, wie dargestellt, beispielsweise durch Schraubelemente mit einem Außengewinde gebildet sein, die von einer lenkradseitigen Stirnseite 38 des Rotors 18 abstehen und die in die mit einem komplementären Innengewinde versehenen Verbindungsgegenmittel 36 eingeschraubt werden können oder umgekehrt.

Das Lenkradgegenlager 32 kann dabei, wie dargestellt, einteilig ausgebildet sein, um eine hohe Stabilität zu gewährleisten. Alternativ hierzu kann das Lenkradgegenlager 32 aber auch mehrteilig ausgebildet sein, beispielsweise um eine einfachere Herstellung, einen einfacheren Transport oder eine leichtere Montage zu ermöglichen.

Zudem weist das Lenkradgegenlager 32 einen innenseitigen Anlegebereich 40 auf, der zum Anlegen an das Lenkrad 4 dient. Dieser Anlegebereich 40 ist dabei ringförmig ausgebildet und verjüngt sich konisch von einer lenkradseitigen Stirnseite 42 zu einer lenkradabgewandten Stirnseite 44 des Lenkradgegenlagers 32.

Wenigstens eines der Verbindungsmittel 34 kann zudem dabei zusammen mit dem Öffnungsabschnitt 22 gegenüber den übrigen Verbindungsmitteln 34 verschwenkbar sein, um den Rotor 18 mit den an der Stirnseite 38 umlaufend abstehenden Verbindungsmitteln 34 problemlos am Lenkrad 4 anbringen zu können.

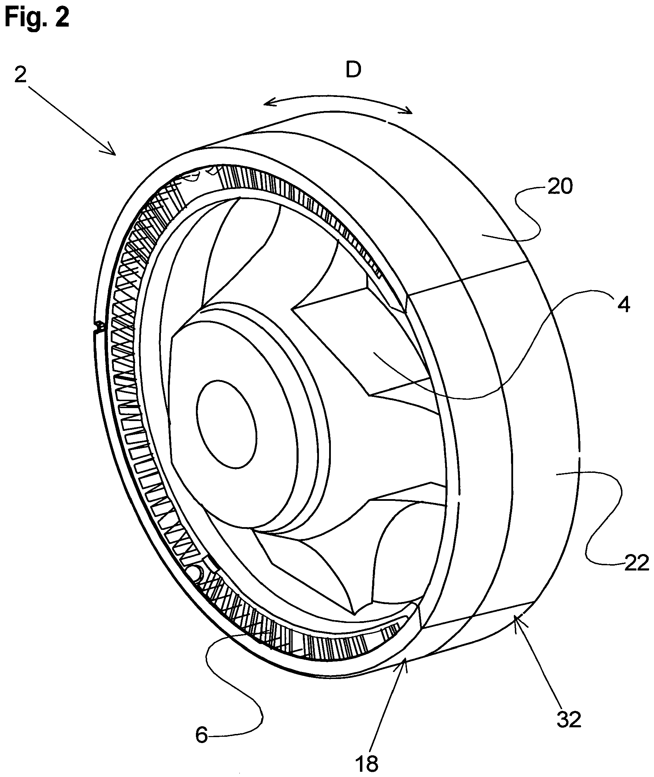

Fig. 2 zeigt die Lenkradbetätigungsvorrichtung 2 im angebrachten Zustand am Lenkrad 4. Dabei ist der Rotor 18 auf dem Stator 6 verdrehbar angeordnet und in die geschlossene Stellung verbracht, in der der Deckungsabschnitt 20 und der Öffnungsabschnitt 22 zusammen ringförmig angeordnet und miteinander verriegelt sind. Gleichzeitig ist der Rotor 18 über die Verbindungsmittel 34 und die Verbindungsgegenmittel 36 unter Zwischenlage des Lenkrades 4 mit dem Lenkradgegenlager 32 verbunden. Dabei sind die Verbindungsmittel 34 beziehungsweise die Verbindungsgegenmittel 36 ausreichend stark angezogen, dass eine drehfeste Verbindung zwischen dem Rotor 18 und dem Lenkrad 4 gewährleistet werden kann. Beim Anziehen der Verbindungsmittel 34 beziehungsweise Verbindungsgegenmittel 36 wird dabei durch den sich konisch verjüngenden Anlegebereich 40 eine selbsttätige Zentrierung des Lenkradgegenlagers 32 und der Lenkradbetätigungsvorrichtung 2 insgesamt gegenüber dem Lenkrad 4 erzielt.

Durch eine Beaufschlagung des Stators 6 mittels einer nicht näher dargestellten Stromversorgung kann der Rotor 18 in dieser betriebsbereiten Stellung nun mit einem Drehmoment beaufschlagt und entlang einer Drehrichtung D verlagert werden. Durch die drehfeste Verbindung der Lenkradbetätigungsvorrichtung 2 mit dem Lenkrad 4 kann dadurch eine gewünschte Lenkbewegung entlang der Drehrichtung D ausgeführt werden. Auf diese Weise kann die Steuerung des betreffenden Kfz ferngesteuert oder automatisiert über den motorisierten Antrieb der Lenkradbetätigungsvorrichtung 2 erfolgen.

Um die Lenkradbetätigungsvorrichtung 2 wieder vom Lenkrad 4 abnehmen zu können, kann der Rotor 18 wieder in eine Drehstellung gemäß Fig. 2 verbracht werden, in der der Öffnungsabschnitt 22 über dem geöffneten Abschnitt 14 des Stators 6 angeordnet ist. In dieser Drehstellung wirken zwischen dem Stator 6 und dem Öffnungsabschnitt 22 lediglich minimale Anziehungskräfte, so dass der Öffnungsabschnitt 22 nach dem Trennen vom Lenkradgegenlager 32 problemlos entriegelt und in die geöffnete Stellung gemäß Fig. 1 verbracht werden kann.

In dieser geöffneten Stellung kann der Rotor 18 wieder vom Stator 6 beziehungsweise vom Lenkrad 4 abgenommen werden, wonach dann auch der Stator 6 von der zum Lenkrad 4 benachbarten Position entfernt werden kann, um dieses ungehindert wieder manuell betreiben zu können.

## Patentansprüche

1. Lenkradbetätigungsvorrichtung (2) für die nachrüstbare Anbringung an einem Lenkrad (4) eines Kfz und dessen motorische Beaufschlagung mit einem Drehmoment,
mit einem gegenüber einer Drehbewegung abstützbaren Stator (6) und einem am Stator (6) verdrehbaren Rotor (18), an dem Festlegemittel (30) zur drehfesten Verbindung mit dem Lenkrad (4) vorgesehen sind,
**dadurch gekennzeichnet, dass** der Stator (6) U-förmig ausgebildet ist, sich dabei über einen Bogenabschnitt (10) erstreckt und einen geöffneten Abschnitt (14) bildet.

2. Lenkradbetätigungsvorrichtung nach Anspruch 1, **dadurch gekennzeichnet, dass** der U-förmige Stator (6) einteilig ausgebildet ist.

3. Lenkradbetätigungsvorrichtung nach Anspruch 1 oder 2, **dadurch gekennzeichnet, dass** sich der Bogenabschnitt (10), über den sich der Stator (6) erstreckt, um eine offene Mitte (12) herum über einen Winkelbereich zwischen 180° und 350°, vorzugsweise zwischen 240° und 300° erstreckt.

4. Lenkradbetätigungsvorrichtung nach einem der Ansprüche 1 bis 3, **dadurch gekennzeichnet, dass** der Rotor (18) ringförmig ausgebildet ist und dabei einen Deckungsabschnitt (20) und einen relativ zu diesem verlagerbaren Öffnungsabschnitt (22) zum Öffnen des Rotors (18) aufweist, wobei der Bogenabschnitt (10) des Stators (6) durch den Deckungsabschnitt (20) des Rotors (18) im Wesentlichen vollständig abdeckbar ist.

5. Lenkradbetätigungsvorrichtung nach Anspruch 4, **dadurch gekennzeichnet, dass** der Öffnungsabschnitt (22) gegenüber dem Deckungsabschnitt (20) verschwenkbar gehalten ist.

6. Lenkradbetätigungsvorrichtung nach Anspruch 4 oder 5, **dadurch gekennzeichnet, dass** zwischen dem Öffnungsabschnitt (22) und dem Deckungsabschnitt (20) lösbare Verriegelungsmittel (26) vorgesehen sind.

7. Lenkradbetätigungsvorrichtung nach einem der Ansprüche 1 bis 6, **dadurch gekennzeichnet, dass** die Festlegemittel (30) wenigstens ein Verbindungselement (34) aufweisen, mittels dem ein Lenkradgegenlager (32) unter Zwischenlage des Lenkrades (4) am Rotor (18) festlegbar ist.

8. Lenkradbetätigungsvorrichtung nach Anspruch 7, **dadurch gekennzeichnet, dass** das Lenkradgegenlager (32) ringförmig ausgebildet ist.

9. Lenkradbetätigungsvorrichtung nach Anspruch 7 oder 8, **dadurch gekennzeichnet, dass** das Lenkradgegenlager (32) einen Anlegebereich (40) aufweist, der sich von einer lenkradseitigen Stirnseite (42) zu einer lenkradabgewandten Stirnseite (44) des Lenkradgegenlagers (32) hin verjüngt.

10. Lenkradbetätigungsvorrichtung nach einem der Ansprüche 7 bis 9, **dadurch gekennzeichnet, dass** das Lenkradgegenlager (32) einteilig ausgebildet ist.

11. Lenkradbetätigungsvorrichtung nach einem der Ansprüche 7 bis 10, **dadurch gekennzeichnet, dass** wenigstens drei sich in axialer Richtung vom Rotor (18) weg erstreckende Verbindungselemente (34) vorgesehen sind, von denen eines am Öffnungsabschnitt (22) gelagert ist

## Claims

1. Steering wheel actuation device (2) for retrofit mounting to a steering wheel (4) of a motor vehicle and for applying motor-driven torque to same,
having a stator (6) suitable for bracing against rotational movement and a rotor (18) capable of rotation at the stator (6), provided at which are securing means (30) for torque-proof attachment to the steering wheel (4),
**characterised in that** the stator (6) is configured as U-shaped, extends over a curved section (10), and forms an open section (14).

2. Steering wheel actuation device according to claim 1, **characterised in that** the U-shaped stator (6) is configured as one piece.

3. Steering wheel actuation device according to claim 1 or 2, **characterised in that** the curved section (10), over which the stator (6) extends, extends around an open middle (12) over an angle range of between 180° and 350°, preferably between 240° and 300°.

4. Steering wheel actuation device according to any one of claims 1 to 3, **characterised in that** the rotor (18) is configured as ring-shaped, and in this situation comprises a covering section (20), and an opening section (22), capable of displacement relative to the covering section, for opening the rotor (18), wherein the curved section (10) of the stator (6) can be essentially fully covered by the covering section (20) of the rotor (18).

5. Steering wheel actuation device according to claim 4, **characterised in that** the opening section (22) is held against the covering section (20) such as to be capable of pivoting.

6. Steering wheel actuation device according to claim 4 or 5, **characterised in that** detachable locking means (26) are provided between the opening section (22) and the covering section (20).

7. Steering wheel actuation device according to any one of claims 1 to 6, **characterised in that** the securing means (30) comprise at least one connection element (34), by means of which a steering wheel counter-bearing (32) can be secured at the rotor (18) with the steering wheel (4) located in between.

8. Steering wheel actuation device according to claim 7, **characterised in that** the steering wheel counter-bearing (32) is configured as ring-shaped.

9. Steering wheel actuation device according to any one of claims 7 to 8, **characterised in that** the steering wheel counter-bearing (32) comprises a contact region (40), which tapers from a face side (42) of the steering wheel counter-bearing, on the steering wheel side, towards a face side (44) of the steering wheel counter-bearing (32) facing away from the steering wheel.

10. Steering wheel actuation device according to any one of claims 7 to 9, **characterised in that** the steering wheel counter-bearing (32) is configured as one piece.

11. Steering wheel actuation device according to any one of claims 7 to 10, **characterised in that** at least three connection elements (34) are provided for, extending in the axial direction away from the rotor (18), one of which is mounted at the opening section (22).

## Revendications

1. Dispositif d'actionnement de volant de direction (2) pour l'installation en seconde monte sur un volant de direction (4) d'un véhicule automobile et pour l'application motorisée d'un couple à ce volant,
comprenant un stator (6) pouvant être maintenu par rapport à un mouvement rotatif et un rotor (18) qui peut être mis en rotation sur le stator (6), rotor sur lequel des moyens de fixation (30) sont prévus pour le raccordement fixe en rotation avec le volant de direction (4),
**caractérisé en ce que** le stator (6) est réalisé en forme de U, s'étend ainsi sur une section en arc (10) et forme une section ouverte (14).

2. Dispositif d'actionnement de volant de direction selon la revendication 1, **caractérisé en ce que** le stator en forme de U (6) est réalisé d'une seule pièce.

3. Dispositif d'actionnement de volant de direction selon la revendication 1 ou 2, **caractérisé en ce que** la section en arc (10), sur laquelle s'étend le stator (6), s'étend autour d'un milieu ouvert (12) sur une plage angulaire entre 180° et 350°, de préférence entre 240° et 300°.

4. Dispositif d'actionnement de volant de direction selon l'une des revendications 1 à 3, **caractérisé en ce que** le rotor (18) est réalisé annulaire et présente une section de couverture (20) et une section d'ouverture (22) pouvant être déplacée relativement à la section de couverture pour l'ouverture du rotor (18), la section en arc (10) du stator (6) pouvant être recouverte sensiblement complètement par la section de couverture (20) du rotor (18).

5. Dispositif d'actionnement de volant de direction selon la revendication 4, **caractérisé en ce que** la section d'ouverture (22) est maintenue de manière pivotante par rapport à la section de couverture (20).

6. Dispositif d'actionnement de volant de direction selon la revendication 4 ou 5, **caractérisé en ce que** des moyens de verrouillage (26) libérables sont prévus entre la section d'ouverture (22) et la section de couverture (20).

7. Dispositif d'actionnement de volant de direction selon l'une des revendications 1 à 6, **caractérisé en ce que** les moyens de fixation (30) présentent au moins un élément de raccordement (34), au moyen duquel un contre-appui de volant de direction (32) peut être fixé au rotor (18) avec interposition du volant de direction (4).

8. Dispositif d'actionnement de volant de direction selon la revendication 7, **caractérisé en ce que** le contre-appui de volant de direction (32) est réalisé annulaire.

9. Dispositif d'actionnement de volant de direction selon la revendication 7 ou 8, **caractérisé en ce que** le contre-appui de volant de direction (32) présente une zone d'appui (40) qui se rétrécit depuis un côté frontal (42) faisant face au volant de direction vers un autre côté frontal (44) du contre-appui de volant de direction (32), opposé au volant de direction.

10. Dispositif d'actionnement de volant de direction selon l'une des revendications 7 à 9, **caractérisé en ce que** le contre-appui de volant de direction (32) est réalisé d'une seule pièce.

11. Dispositif d'actionnement de volant de direction selon l'une des revendications 7 à 10, **caractérisé en ce qu'**il est prévu au moins trois éléments de raccordement (34) s'étendant en direction axiale à partir du rotor (18), dont l'un d'eux est monté sur la section d'ouverture (22).
